# EUROPEAN PATENT APPLICATION

(11) **EP 3 073 209 A1**
(43) Date of publication of application: **28.09.2016**
(21) Application number: 15165207.0
(22) Date of filing: 27.04.2015
(51) Int. Cl.: F24J 2/52

(54) **REINFORCING STRUCTURE FOR SOLAR PANEL MODULE**

(30) Priority: 23.03.2015 TW 104109141
(71) Applicant: Hulk Energy Technology Co., Ltd., 35154 Miaoli County (TW)
(72) Inventor: HUANG, Ting-Hui, 35154 Miaoli County (TW)
(74) Representative: Straus, Alexander

(57) **Abstract**

A reinforcing structure (300, 300', 300") for solar panel module (1000) is provided. The solar panel module (1000) has multiple solar panels (100, 100') and a frame (160, 160', 160") at a periphery region of the solar panel module (1000) surrounding the multiple solar panels (100, 100"). The reinforcing structure (300. 300', 300") is disposed in a region incapable of generating power between two said solar panels (100, 100').

## Description

### FIELD OF THE INVENTION

The present invention relates to a reinforcing structure for solar panel module, especially to a reinforcing structure disposed on the front side and/or back side of the solar panel module.

### BACKGROUND OF THE INVENTION

Solar panel modules are generally installed outside houses especially on roofs or in yards, so solar panel modules would be exposed to severe weather conditions such as gust of winds or blizzard. When non-flexible or flexible solar panel modules encounter excessive wind pressure or subject to heavy weight of snow accumulation thereon, solar panel modules tend to bend, distort or break, thereby causing malfunction of solar panel modules.

In regard to the problems stated above, a reinforcing structure to help solar panel module withstand severe weather conditions is needed.

### SUMMARY OF THE INVENTION

One purpose of the present invention is to provide a reinforcing structure for solar panel module. The solar panel module comprises a plurality of solar panels and a frame at a periphery region of the solar panel module surround the plurality of solar panels. The reinforcing structure is disposed in a region incapable of generating power between adjacent solar panels.

In one embodiment of the present invention, the reinforcing structure is coupled to the frame by at least one securing device such as a clamping device or a tension-adjusting device. In another embodiment of the present invention, the reinforcing structure encircles the frame. The reinforcing structure may be a cable, a circular rod, a rectangular rod, a metallic sheet or a H beam.

In one embodiment of the present invention, the solar panel module further comprises an elongated supporting structure disposed on the back side of the solar panel module.

In one embodiment of the present invention, the reinforcing structure is an elongated structure having a length, when sun light illuminates from a direction perpendicular to the length toward the solar panels and forms an angle of 30 degree with respect to the solar panels, a shadow of the reinforcing structure does not overlap with the solar panels.

### BRIEF DESCRIPTION OF THE DRAWINGS

FIG. 1 shows a schematic top view of a solar panel module and a front-side reinforcing structure according to first, second or third embodiments of the present invention.
FIG. 2 shows a schematic back view of the solar panel module, a front-side reinforcing structure according to the first embodiment and a back-side supporting structure of the present invention
FIG. 3 shows a cross-sectional view of the solar panel module, the front-side reinforcing structure and the back-side supporting structure of FIG. 2.
FIG. 4 shows a schematic back view of a solar panel module, a front-side reinforcing structure according to the second or third embodiment and a back-side supporting structure of the present invention.
FIG. 5 shows a cross-sectional view of the solar panel module, the front-side reinforcing structure according to the second embodiment and the back-side supporting structure of FIG. 4.
FIG. 6 shows a cross-sectional view of the solar panel module, the front-side reinforcing structure according to the third embodiment and the back-side supporting structure of FIG. 4.
FIG. 7 shows a cross-sectional view of another back-side supporting structure of the present invention or a longitudinal sectional view of yet another back-side supporting structure of the present invention.

### DETAILED DESCRIPTION OF THE INVENTION

The following descriptions illustrate preferred embodiments of the present invention in detail. All the components, sub-portions, structures, materials and arrangements therein can be arbitrarily combined in any sequence despite their belonging to different embodiments and having different sequence originally. All these combinations are falling into the scope of the present invention.

There are a lot of embodiments and figures within this application. To avoid confusions, similar components are designated by the same or similar numbers. To simplify figures, repetitive components are only marked once.

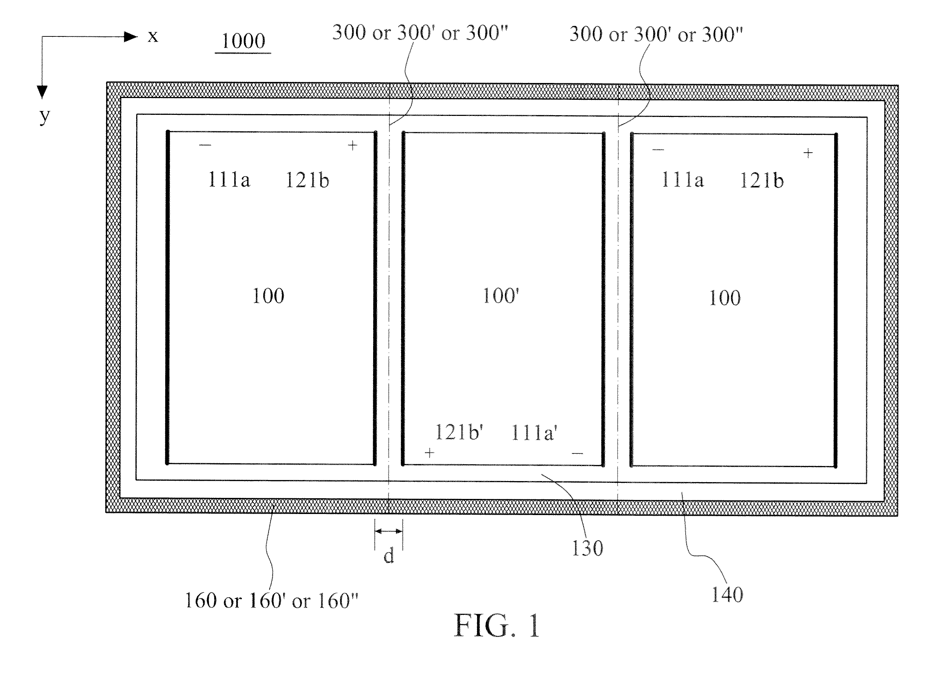

Now refer to FIGS. 1-3. They show the schematic top view, schematic top view and cross-sectional view respectively of a solar panel module 1000, a front-side reinforcing structure 300 according to the first embodiment of the present invention and a back-side supporting structure 500 of the present invention. As shown in FIGS. 1-3, the solar panel module 1000 comprises a plurality of non-flexible solar panels 100 and 100' (FIGS. 1-3 only show three panels but the module may comprise more than three panels), a cover panel 130, a back sheet 140 and a frame 160.

The plurality of non-flexible solar panels 100 and 100' have rectangular shapes and each of them has a short side along x-direction and a long side along y-direction. The cover panel 130 and the back sheet 140 also have rectangular shapes and each of them has a short side along y-direction and a long side along x-direction. The size of the back sheet 140 is slightly larger than the size of the cover panel 130. The plurality of non-flexible solar panels 100 and 100' are disposed in juxtaposed relation along the long sides of the cover panel 130 and the back sheet 140 and between the cover panel 130 and the back sheet 140. One or more encapsulants (now shown) are disposed between the plurality of non-flexible solar panels 100 and 100' and the cover panel 130 and between the plurality of non-flexible solar panels 100 and 100' and the back sheet 140 to couple them together. Each non-flexible solar panel 100 should keep an appropriate distance d (shortest distance between two solar panels) from adjacent non-flexible solar panel 100'. The distance d in FIG. 1 represents one of the regions incapable of generating power between adjacent solar panels in the solar panel module 1000.

Each non-flexible solar panel 100 (100') comprises a stacked structure having from bottom to top a back glass (not shown) and a photoreactive device layer (not shown). The photoreactive device layer comprises from bottom to top a patterned lower electrode layer, a patterned photoelectric conversion layer, an optional patterned buffer layer and a transparent patterned upper electrode layer such as indium tin oxide (ITO) and/or zinc oxide (ZnO) layer. The patterned lower electrode layer and the transparent patterned upper electrode layer are configured to conduct electrical current generated by the photoelectric conversion layer. The photoelectric conversion layer is configured to receive light penetrating the transparent patterned upper electrode layer and the optional patterned buffer layer and convert the light into electricity. The photoelectric conversion layer may be formed from a semiconductor material composed of copper (Cu), indium (In), gallium (Ga) and selenium (Se). Alternatively, the photoelectric conversion layer may be formed from a semiconductor compound material comprising Ib group element such as copper (Cu) or silver (Ag). IIIb group element such as aluminum (Al), gallium (Ga) or indium (In) and VIb group element such as sulfur (S), selenium (Se) or tellurium (Te). The optional patterned buffer layer is configured to protect the photoelectric conversion layer during patterning of the photoelectric conversion layer and facilitate current conducting. The non-flexible solar panels 100 and 100' are the same in view of their structures and their difference lies on their orientations. Therefore, this application only describes the non-flexible solar panel 100 in detail and the details of the non-flexible solar panel 100' are omitted.

Each non-flexible solar panel 100 (100') further comprises a front side positive ribbon 121b (121b') and a front side negative ribbon 111a (111a') at two long sides opposite to each other of the front surface of the solar panel 100 (100'), a backside positive ribbon 122b (122b') as a part of the front side positive ribbon 121b (121b') folded back to the back surface of the non-flexible solar panel 100 (100') and a backside negative ribbon 112a (112a') as a part of the front side negative ribbon 111a (111a') folded back to the back surface of the non-flexible solar panel 100 (100'). In most of the figures of the present invention, the backside positive ribbon 122b (122b') and the backside negative ribbon 112a (112a') are shown by dashed lines to be different from the front side positive ribbon 121b (121b') and the front side negative ribbon 111a (111a') shown by solid lines. The front side positive ribbon 121b (121b') and the front side negative ribbon 111a (111a') are used as a positive electrode and a negative electrode of the non-flexible solar panel respectively. The back sheet 140 has a plurality of openings (not shown) and each solar panel 100 (100') corresponds to at least one opening in a central region (or other region) of said each solar panel 100 (100'). The backside positive ribbon 122b (122b') and the backside negative ribbon 112a (112a') of each solar panel 100 (100') extend through an encapsulant (if exist, not shown) and at least one of plurality of openings (not shown) and electrically connect outward (to other solar panels and to a connection box). The ribbons for example can be made from copper foil, copper ribbon, foils of other metals or alloy or ribbons of other metals or alloys. Each non-flexible solar panel 100 (100') comprises at least one solar unit cell or comprises many solar unit cells electrically connected in serial. It is noted that the ribbons can be electrically connected in serial or parallel and can be electrically connected to a connection box, but these connecting relations are not shown in the figures of the present application.

As shown in FIGS. 1-3, the rectangular frame 160 is disposed at a periphery region of the solar panel module 1000 to clamp a stacked structure of the cover panel 130, the non-flexible solar panels 100 and 100' and the back sheet 140. The rectangular frame 160 surrounds all the non-flexible solar panels 100 and 100'.Viewing from a top view, the rectangular frame 160 may be composed of four sub-portions including two short portions covering two short sides of the module 1000 and two long portions covering two long sides of the module 1000. Alternatively, the rectangle frame 160 may be composed of two L-shaped sub-portions with each portion covering a long side and a short side of the module 1000. The rectangle frame for example is a aluminum frame.

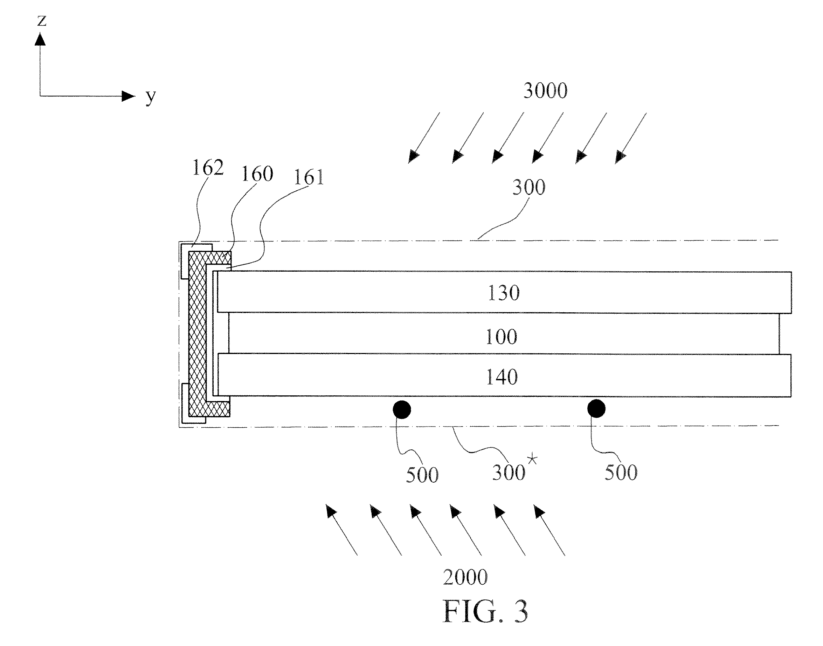

According to the first embodiment of the present invention, front-side reinforcing structures 300 are disposed along y-direction in regions incapable of generating power (representing by distance d) between adjacent non-flexible solar panels 100 and 100' in the solar panel module 1000. In this embodiment, as shown in FIG. 3, the front-side reinforcing structure 300 extends along y-direction from a front side to a back side of the solar panel module 1000 in order to encircle the solar panel module 1000 (thus the frame 160). The extending portion of the front-side reinforcing structure 300 on the back side of the solar panel module 1000 becomes a backside reinforcing structure 300*. In order to eliminate direct contact between the reinforcing structures 300 and 300* and the frame 160 and to prevent reinforcing structures 300 and 300* from sliding, one or more cushion pads 162 may optionally be disposed between the reinforcing structures 300 and 300* and the frame 160. Furthermore, in order to prevent reinforcing structures 300 and 300* from getting too close to the cover panel 130 (and/or back sheet 140), one or more cushion pads may optionally be disposed between the reinforcing structures 300 and 300* and the cover panel 130 (and/or back sheet 140). The front-side and backside reinforcing structures 300 and 300* preferably are metallic cable. However, due to various designs and arranging fashions, the reinforcing structure can be disposed only on the front side and may be an elongated structure other than a cable such as a circular rod, a rectangular rod, a metallic sheet or a H beam. Cushion pads may be disposed on the frame 160, on the cover panel 130 and/or on the back sheet 140. Cushion pads may also be disposed on the reinforcing structure 300 (300*) or has a ring shape encircling the reinforcing structure 300 (300*). Cable is a high tensile structure. When the solar panel module 1000 integrated with the reinforcing cable 300 (300*) is under a load such as wind pressure 2000 or snow accumulation 3000, the reinforcing cable 300 (300*) would distort as the solar panel module 1000 distorts and reduce stress concentration. When the load disappears, the reinforcing cable 300 (300*) would recover as the solar panel module 1000 recovers.

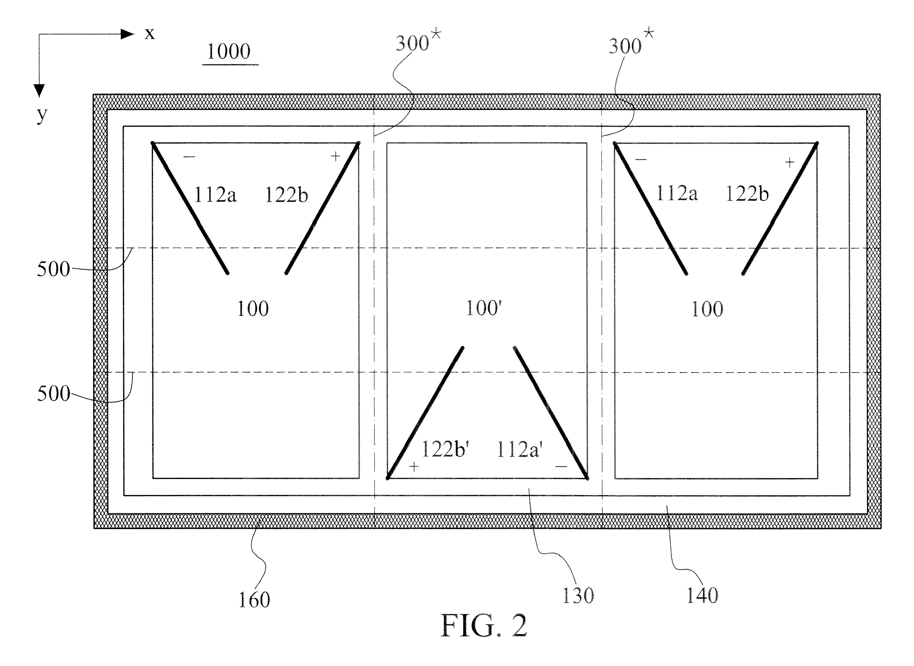

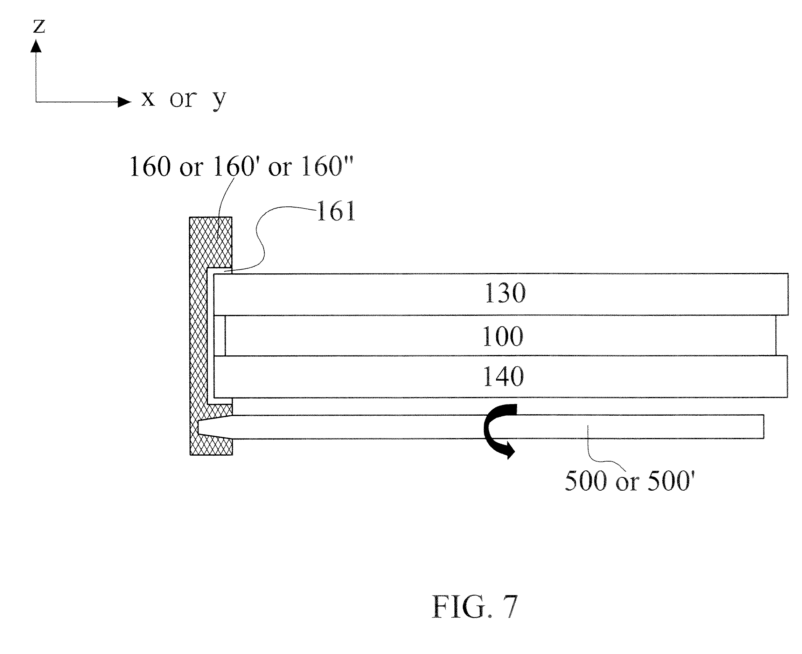

In order to increase the ability of the solar panel module 1000 to withstand strong wind and to prevent the solar panel module 1000 from excessively distorting and separating with the frame 160, a backside elongated supporting structure 500 may be disposed along a direction not parallel to the reinforcing structure 300 (300*) especially a direction perpendicular to the reinforcing structure 300 (300*) such as x-direction on the back side of the solar panel module 1000 as shown in FIGS. 2 and 3. The backside supporting structure such as backside supporting structure 500' may be disposed on the back side of the module 1000 along a direction parallel to reinforcing structure 300 (300*) such as y-direction as shown in FIG. 7. The backside supporting structure 500 (500') provides tensile force from inner sides of the frame 160 to counteract compressive force caused by reinforcing structure 300 (300*) from outer sides of the frame 160. When the solar panel module 1000 is under a load, the tensile force provided by the supporting structure 500 (500') and the compressive force caused by the reinforcing structure 300 (300*) can reach a balanced steady state. Please refer to FIG. 7. FIG. 7 shows a cross-sectional view of a solar panel module and another back-side supporting structure 500 of the present invention or a longitudinal sectional view of yet another back-side supporting structure 500' of the present invention (the back view of the structure 500' is not shown in the present application). Depending on the orientation of the supporting structure 500 (500'), the two short sides (or the two long sides) of the frame 160 both have recessed trenches (only one short side and one recessed trench are shown in FIG. 7) on the inner side of the frame 160 for receiving two opposite ends of the supporting structure 500 (500') such as a supporting rod or a H beam to make the supporting structure 500 (500') against the frame. If the recessed trenches are deep enough to reach the outer side of the frame 160, the two opposite ends of the supporting structure 500 (500') would penetrate the frame 160 and be exposed from the frame 160 (this situation is not shown). The supporting structure 500 (500') may be a retractable or telescopic supporting rod with various designs. Furthermore, as shown in FIG. 7, the opposite ends of the supporting structure 500 (500') may have taper profiles with reduced cross-sectional areas. The corresponding recessed trenches may have similar profiles accordingly to engage with the opposite ends of the supporting structure 500 (500'). Furthermore, in order to prevent direct contact between the frame and the supporting structure 500 (500'), cushion pads may be similarly disposed between the frame 160 and the opposite ends of the backside supporting structure 500 (500'). Although not shown or discussed, the backside supporting structure 500 (500') may be disposed diagonally against two opposite sides of the frame 160. That is, the backside supporting structure 500 (500') is neither parallel nor perpendicular to the reinforcing structure 300. The backside supporting structure 500 (500') may have a grid design and is against four sides of the frame 160.

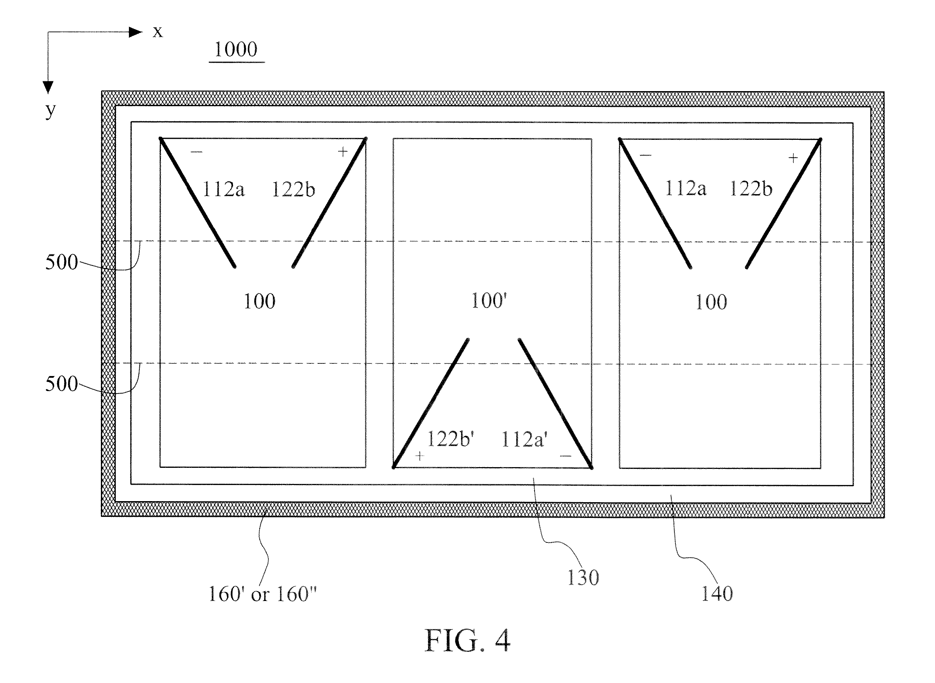

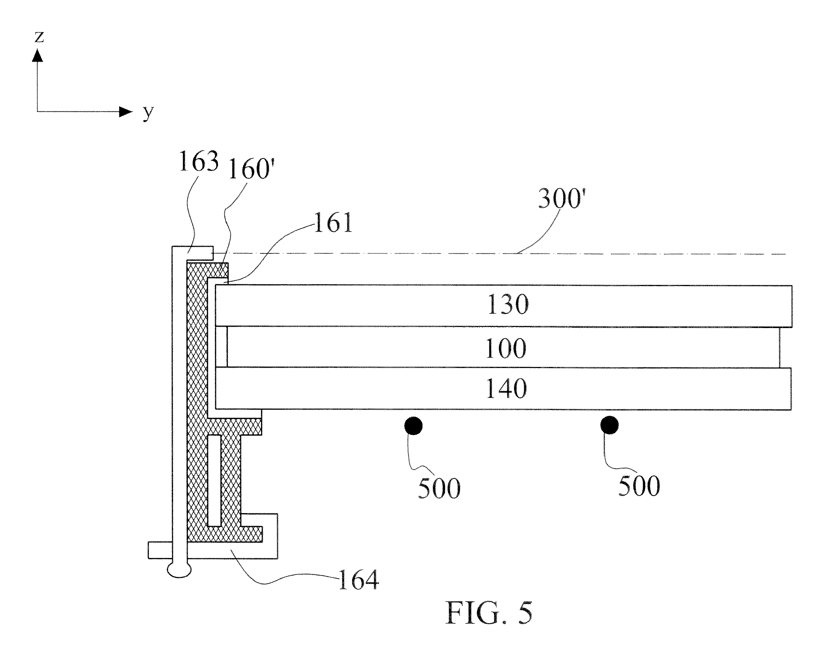

Now refer to FIGS. 4-5. They show a schematic back view and a cross-sectional view of the solar panel module 1000, a front-side reinforcing structure 300' according to the second embodiment and the back-side supporting structure 500 of the present invention. The differences between the second embodiment and the first embodiment lie on a front-side reinforcing structure 300', how it is secured and the design of a frame 160'. In the second embodiment, the frame 160' has a downward extending portion and a hook-like second securing device 164 clamps the downward extending portion to be fixed in place. A first securing device 163 such as a clamp for coupling the front-side reinforcing structure 300' such as a cable is tightly coupled to the second securing device 164 through a screw or other fixtures. The front-side reinforcing structure 300' such as a cable may be coupled to the first securing device 163 through knot, adhesive, welding, clamping or twirling. A tension-adjusting device (not shown) may be disposed between the front-side reinforcing structure 300' and the first securing device in order to facilitate the coupling effect and adjust the tensile strength of the front-side reinforcing structure 300' appropriately or periodically. In this embodiment, the reinforcing structure is only disposed on the front side of the solar panel module, so no reinforcing structure is shown in the back view of FIG. 4. If better reinforcing effect is desired, a reinforcing structure may also be disposed on the back side of the solar panel module. The rest elements of the solar panel module 1000 and the backside supporting structure 500 (500') of this embodiment are the same as the ones of the first embodiment, so they are described again here.

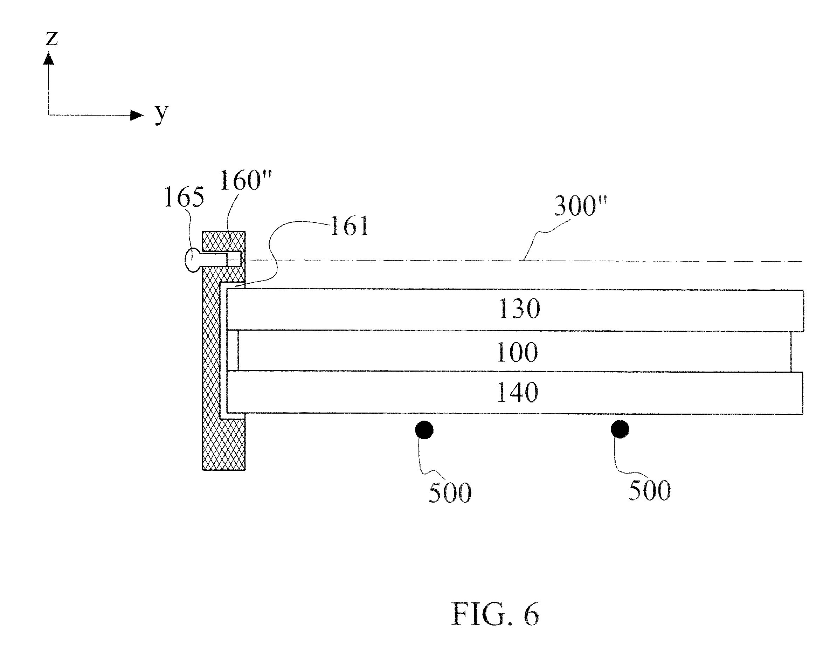

Now refer to FIGS. 4 and 6. They show a schematic back view and a longitudinal sectional view of the solar panel module 1000, a front-side reinforcing structure 300" according to the third embodiment and the back-side supporting structure 500 of the present invention. The differences between the third embodiment and the first embodiment lie on a front-side reinforcing structure 300", how it's secured and the design of a frame 160". In the third embodiment, the frame 160" has a outer recessed trench such as a screw hole for receiving a third securing device 165. The front-side reinforcing structure 300" such as a cable is coupled to the third securing device 165 and penetrates a small hole (not shown) within the frame 160" to reach inner side of the frame 160". The front-side reinforcing structure 300" such as a cable may be coupled to the third securing device 165 through knot, adhesive, welding, clamping or twirling. The front-side reinforcing structure 300" may be a tension-adjusting device (not shown) per se to secure the front-side reinforcing structure 300" and adjust the tensile strength of the front-side reinforcing structure 300" appropriately or periodically. In this embodiment, the reinforcing structure is only disposed on the front side of the solar panel module, so no reinforcing structure is shown in the back view of FIG. 4. If better reinforcing effect is desired, a reinforcing structure may also be disposed on the back side of the solar panel module. The rest elements of the solar panel module 1000 and the backside supporting structure 500 (500') of this embodiment are the same as the ones of the first embodiment, so they are described again here.

The front-side reinforcing structure 300 (300'/300") of the present invention are disposed in a region incapable of generating power between two adjacent solar panels. In order not to interfere with the solar panels, the location, shape and size of the reinforcing structure 300 (300'/300") are so chosen that when sun light illuminates from a direction perpendicular to the length of the reinforcing structure 300 (300'/300") (such as from +x-direction or from -x-direction) toward the solar panels 100 and 100' and forms an angle of 30 degree or even 15 degree with respect to the solar panels 100 and 100', a shadow of the reinforcing structure 300 (300'/300") does not overlap with the solar panels 100 and 100'. The reinforcing structures and supporting structures of the prevent invention can be applied to other types of solar modules with regions incapable of generating power especially solar modules of big size to prevent solar modules from distorting and separating from their frames due to strong wind pressure or snow accumulation. In a case where the supporting structure is disposed along a direction parallel to the reinforcing structure, their disposing locations may align or misalign. According to the reinforcing effect/supporting effect provided, the gap between two adjacent supporting structures may be the same as or different from the gap between two adjacent reinforcing structures.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A reinforcing structure (300, 300', 300") for solar panel module (1000), comprising:
a plurality of solar panels (100, 100'); and
a frame (160, 160', 160")) at a periphery region of the solar panel module (1000) surrounding the plurality of solar panels (100, 100'),
wherein the reinforcing structure (300, 300', 300") is disposed in a region incapable of generating power between adjacent solar panels (100, 100').

2. The reinforcing structure for solar panel module according to claim 1, wherein the reinforcing structure (300', 300") is coupled to the frame (160', 160") by at least one securing device (163, 165).

3. The reinforcing structure for solar panel module according to claim 2, wherein the at least one securing device (163, 165) is a clamping device or a tension-adjusting device.

4. The reinforcing structure for solar panel module according to claim 1, wherein the reinforcing structure (300) extends from a front side of the solar panel module (1000) to a back side of the solar panel module (1000) in order to encircle the frame (160).

5. The reinforcing structure for solar panel module according to claim 1 or 4, further comprising:
a cushion pad (162), disposed between the reinforcing structure (300) and the solar panel module (100, 100').

6. The reinforcing structure for solar panel module according to claim 5, wherein the cushion pad (162) is disposed between the reinforcing structure (300) and the frame (160).

7. The reinforcing structure for solar panel module according to claim 1, wherein one end of the reinforcing structure (300") is coupled with a tension-adjusting device (165).

8. The reinforcing structure for solar panel module according to claim 1, wherein the reinforcing structure (300, 300', 300") is a cable, a circular rod, a rectangular rod, a metallic sheet or a H beam.

9. The reinforcing structure for solar panel module according to any of claims 1-8, wherein there is a gap between the reinforcing structure (300, 300', 300") and the solar panels (100, 100').

10. The reinforcing structure for solar panel module according to any of claims 1-9, wherein the reinforcing structure (300, 300', 300") is an elongated structure having a length, when sun light illuminates from a direction perpendicular to the length toward the solar panels (100, 100') and forms an angle of 30 degree with respect to the solar panels (100, 100'), a shadow of the reinforcing structure (300, 300', 300") does not overlap with the solar panels (100, 100').

11. The reinforcing structure for solar panel module according to any of claims 1-10, wherein the reinforcing structure (300, 300', 300") is an elongated structure and the solar panel module (1000) on its back side further comprising:
an elongated supporting structure (500, 500').

12. The reinforcing structure for solar panel module according to claim 11, wherein the elongated support structure (500, 500') is a retractable supporting rod.

13. The reinforcing structure for solar panel module according to claim 12, wherein two opposite ends of the retractable supporting rod (500, 500') are against two opposite sides of the frame (160, 160', 160").

14. The reinforcing structure for solar panel module according to claim 13, further comprising:
a cushion pad, disposed between the retractable supporting rod (500, 500') and the frame (160, 160' 160").

15. The reinforcing structure for solar panel module according to claim 13 or 14, wherein the two opposite ends of the retractable supporting rod (500, 500') penetrate the frame (160, 160' 160") and are exposed from the frame (160, 160' 160").

## Amended claims

### Amended claims in accordance with Rule 137(2) EPC.

1. A reinforcing structure (300, 300', 300") for a solar panel module (1000), the solar panel module comprising:
a plurality of solar panels (100, 100'); and
a frame (160, 160', 160") at a periphery region of the solar panel module (1000) surrounding the plurality of solar panels (100, 100'),
wherein the reinforcing structure (300, 300', 300") is disposed in a region incapable of generating power between adjacent solar panels (100, 100') and is not in physical contact with all the solar panels (100, 100').

2. The reinforcing structure for solar panel module according to claim 1, wherein the reinforcing structure (300', 300") is coupled to the frame (160', 160") by at least one securing device (163, 165).

3. The reinforcing structure for solar panel module according to claim 2, wherein the at least one securing device (163, 165) is a clamping device or a tension-adjusting device.

4. The reinforcing structure for solar panel module according to claim 1, wherein the reinforcing structure (300) extends from a front side of the solar panel module (1000) to a back side of the solar panel module (1000) in order to encircle the frame (160).

5. The reinforcing structure for solar panel module according to claim 1 or 4, further comprising:
a cushion pad (162), disposed between the reinforcing structure (300) and the solar panel module (100, 100').

6. The reinforcing structure for solar panel module according to claim 5, wherein the cushion pad (162) is disposed between the reinforcing structure (300) and the frame (160).

7. The reinforcing structure for solar panel module according to claim 1, wherein one end of the reinforcing structure (300") is coupled with a tension-adjusting device (165).

8. The reinforcing structure for solar panel module according to claim 1, wherein the reinforcing structure (300, 300', 300") is a cable, a circular rod, a rectangular rod, or a H beam.

9. The reinforcing structure for solar panel module according to any of claims 1-8, wherein there is a gap between the reinforcing structure (300, 300', 300") and the solar panels (100, 100').

10. The reinforcing structure for solar panel module according to any of claims 1-9, wherein the reinforcing structure (300, 300', 300") is an elongated structure having a length, when sun light illuminates from a direction perpendicular to the length toward the solar panels (100, 100') and forms an angle of 30 degree with respect to the solar panels (100, 100'), a shadow of the reinforcing structure (300, 300', 300") does not overlap with the solar panels (100, 100').

11. The reinforcing structure for solar panel module according to any of claims 1-10, wherein the reinforcing structure (300, 300', 300") is an elongated structure and the solar panel module (1000) on its back side further comprising:
an elongated supporting structure (500, 500').

12. The reinforcing structure for solar panel module according to claim 11, wherein the elongated support structure (500, 500') is a retractable supporting rod.

13. The reinforcing structure for solar panel module according to claim 12, wherein two opposite ends of the retractable supporting rod (500, 500') are against two opposite sides of the frame (160, 160', 160").

14. The reinforcing structure for solar panel module according to claim 13, further comprising:
a cushion pad, disposed between the retractable supporting rod (500, 500') and the frame (160, 160' 160").

15. The reinforcing structure for solar panel module according to claim 13 or 14, wherein the two opposite ends of the retractable supporting rod (500, 500') penetrate the frame (160, 160' 160") and are exposed from the frame (160, 160' 160").
